# EUROPEAN PATENT APPLICATION

(11) **EP 0 539 944 A2**
(43) Date of publication of application: **05.05.1993**
(21) Application number: 92118421.4
(22) Date of filing: 28.10.1992
(51) Int. Cl.: F25B 41/06, G01K 1/16

(54) **Expansion valve and temperature sensing assembly therefor**

(30) Priority: 31.10.1991 US 785834
(71) Applicant: EATON CORPORATION, Cleveland, Ohio 44114-2584 (US)
(72) Inventor: Torrence, Robert James, Addison, Illinois 60101 (US); Glennon, Thomas Francis, Darien, Illinois 60559 (US); Jungels, Robert Charles, Naperville, Illinois 60566 (US)
(74) Representative: Wagner, Karl H., Dipl.-Ing.

(57) **Abstract**

A refrigerant valve (10) has a sensing port (20) communicating with a refrigerant flow passage (16) therein with a deep-well tubular thermally conductive metal closure (30) sealed about the port (20) with the closed end in said port. A closed end metal probe (18) with a thermistor (50) disposed therein closely interfits the well of the closure (30) for heat transfer therewith. The probe (18) extends exteriorly of the closure (30) and is attached to a housing (34) or cover removably secured to the valve (10). Signal conditioning circuit board (146) means disposed in the housing (34) is connected to the thermistor (50) leads extending from the open end of the probe (18). Electrical terminals (62) or leads connect to circuitry and extend outwardly from the housing (34). The housing (34) and probe (18) may be removed as a unit without disturbing the seal (30) of the sensing port closure in the valve (18).

## Description

### BACKGROUND OF THE INVENTION

The present invention relates to sensing of fluid flow temperature in a conduit of a closed system such as a refrigerant flow in refrigeration or air conditioning system, particularly the sensing of refrigerant temperature in such systems employing a thermostatically controlled expansion valve for controlling refrigerant flow to the evaporator.

In certain types of refrigerant systems, such as those employed in automotive air conditioning units, the thermostatically controlled expansion valve is used. In addition to the high pressure inlet and valved low pressure outlet, the valve usually has an unvalved return flow passage through the valve block. Typically, the flow through the return passage is evaporator discharge flow. In such an arrangement, it has been found desirable to provide a sensing port into the flow passage through the valve block or a sensing port through the valve block to the valved outlet to the evaporator and an electrical refrigerant temperature sensing device on the expansion valve for providing an electrical temperature control signal to perform certain control functions in the system, such as compressor clutch cycling and/or condenser fan cutout.

However, problems have been encountered in mounting an electrical temperature sensing device on a conduit or the block of a thermal expansion valve for providing an electrical refrigerant flow temperature signal and in particular, problems have been encountered in attaching and sealing an electrical temperature sensing element such as a thermistor to the sensing port in the valve block in a manner permitting the thermistor to sense refrigerant flow temperature through the wall of the valve block into the refrigerant flow passage. In particular, problems have been encountered in providing a means for sealing the sensing port in the valve block with sufficient integrity to prevent loss of refrigerant over the service life of the valve when installed in a vehicle air conditioning system. It has also been difficult to provide adequate heat transfer to the thermistor to provide sufficiently rapid response to changes in the refrigerant flow temperature to enable the thermistor to provide a usable temperature signal.

It has thus been desired to provide a way or means of mounting a thermistor through a sensing port for sensing fluid flow and to provide for some signal conditioning circuitry at the thermistor to provide for improved signal-to-noise ratios and sufficient voltage level to permit signal transmission to a remote location for use by a microprocessor.

### SUMMARY OF THE INVENTION

The present invention provides a combination of a thermistor assembled into a port provided in the wall of a fluid conduit to permit sensing of the fluid temperature flowing therein, and in particular through the wall of the block of a refrigerant expansion valve to permit sensing temperature of the flow of refrigerant fluid therein.

A metal closure cup has the rim thereof sealed about a sensing port provided in the conduit wall or valve block. The rim of the cup is preferably flanged outwardly to seal over an annular seal ring provided thereabout and the flange mechanically retained. In one embodiment, a cover having a generally cupped shape has a thermistor mounted through a post extending from the interior of the cover and outwardly therefrom with thermally conductive material encasing the thermistor. In one embodiment the thermally conductive solid material comprises plastic or epoxy material molded over the thermistor and sized to closely interfit the interior of the metal cup. In another embodiment the cover comprises a split-shell housing secured together along a parting line attached to the valve block by a mounting bracket; and, the thermally conductive solid material comprises a closed end metallic tubular probe having relatively high thermal conductivity received over the end of the thermistor with the metallic probe closely interfitting and contacting the inner periphery of the metal cup upon assembly of the cover over the port. The probe is retained in the housing upon securement of the split shell at the parting line. A printed circuit board is potted in the cover in one embodiment, and in a split-shell housing in another embodiment. The sensor assembly has either electrical leads with a connector thereon in the split-shell cover, or connector terminals extending outwardly through the cup-shaped cover with an integrally formed shroud for facilitating external electrical connection to the printed circuit board when the sensor assembly is installed over the sensing port.

### BRIEF DESCRIPTION OF THE DRAWINGS

FIG. 1 is a top view of a thermal expansion valve assembly employing the present invention;
FIG. 2 is a right hand view of the embodiment of FIG. 1;
FIG. 3 is a section view taken along section indicating lines 3-3 of FIG. 2.;
FIG. 4 is top view of another embodiment of the invention as installed in a refrigerant expansion valve;
FIG. 5 is a left side view of the embodiment of FIG. 4;
FIG. 6 is a right side view of the embodiment of FIG. 4;
FIG. 7 is a somewhat perspective view of the thermal sensor assembly of the embodiment of FIG. 4;
FIG. 8 is a view taken along line 8-8 of FIG. 7, with portions of the housing broken away to expose the interior;
FIG. 9 is a section view taken along section-indicating line 9-9 of FIG. 8; and,
FIG. 10 is an enlarged view of a portion of FIG. 5 showing the details of the sensor port with the probe assembly installed therein.

### DETAILED DESCRIPTION

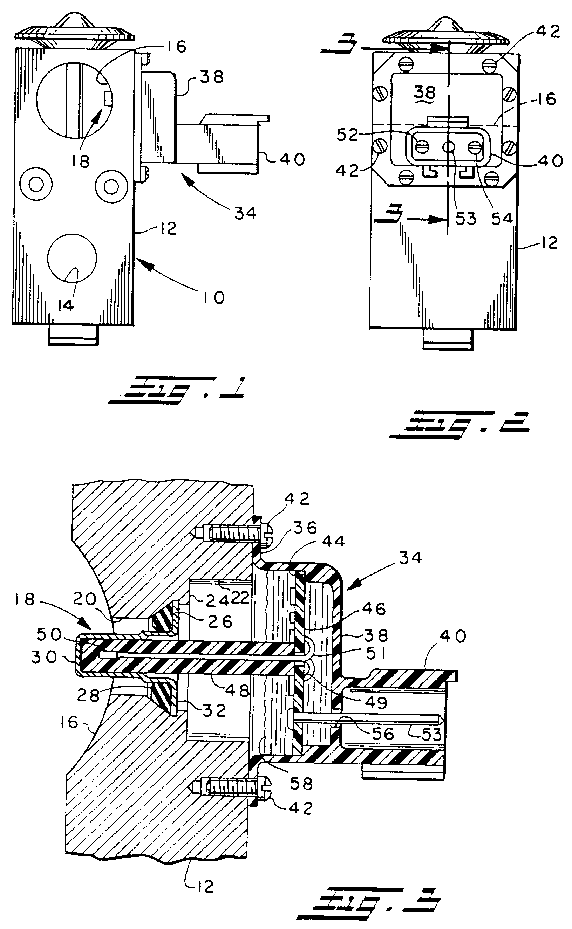

Referring to FIG. 1, a thermal expansion valve indicated generally at 10 has a body or block 12 with a reduced pressure refrigerant flow outlet 14, flow to which is valved internally within the block from a high pressure inlet (not shown). A separate unvalved return passage 16 extends continuously through the block unvalved and is adapted for connection to receive refrigerant discharging from an evaporator for flowing therethrough and return to the system compressor (not shown).

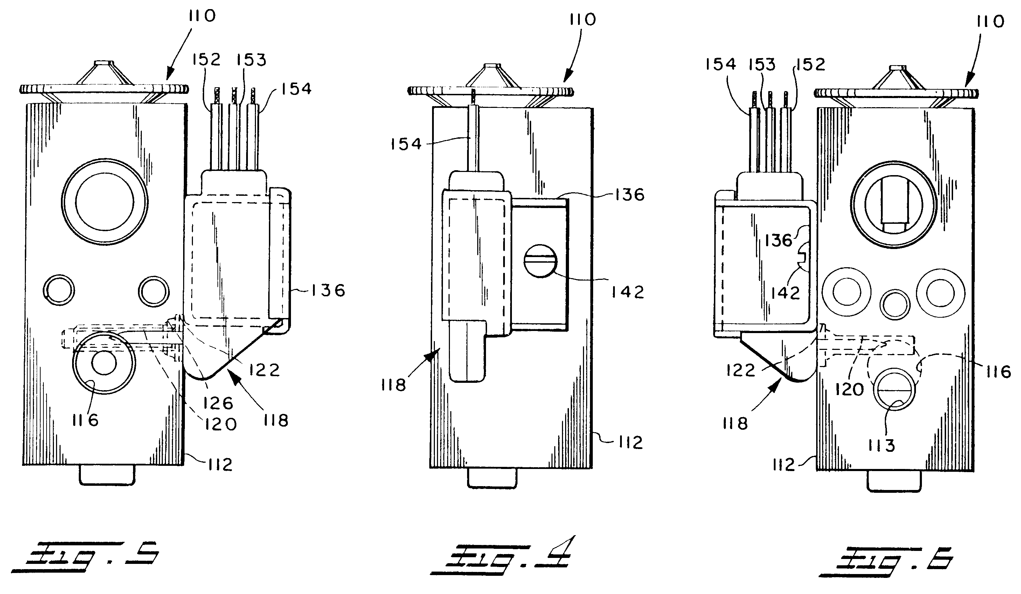

Referring to FIGS. 1 through 3, a temperature sensing device indicated generally at 18 is received in a temperature sensing port 20 formed through the block 12 to intersect the passage 16. The port 20 has an enlarged diameter counterbore 22 adjacent the surface of the block and a chamfered portion 26 intersecting the bottom 24 of the counterbore 22.

The sensing port 20 is closed by a cup-shaped member 30 having a closed end and a radially outwardly extending flange 32 provided about the rim of the open end thereof. Flange 32 is sealed against chamfer 26 by an annular seal ring 28 and retained thereon by any suitable mechanical fastening expedient such as by deformation of the block material over the edge of the flange 33 by any suitable means as, for example, staking. The cup-shaped member 30 is preferably formed of metallic material having a relatively high thermal conductivity such as corrosion resistant steel, nickel, aluminum, brass, or copper.

Referring to FIGS. 1 through 3, an electrical temperature sensing probe assembly, indicated generally at 34 employs a generally cup-shaped cover 38 having the rim thereof formed in an outwardly extending flange 36 which is attached to the valve body 12 by suitable fasteners 42. A shroud portion 40 is formed integrally with the cover 38 and extends outwardly therefrom and is adapted for external connection thereto by any suitable expedient such as a bayonet snap locking connector.

The cover has a shoulder 44 provided around the inner periphery thereof which has received thereagainst a circuit board 46 which may contain any appropriate signal conditioning circuitry.

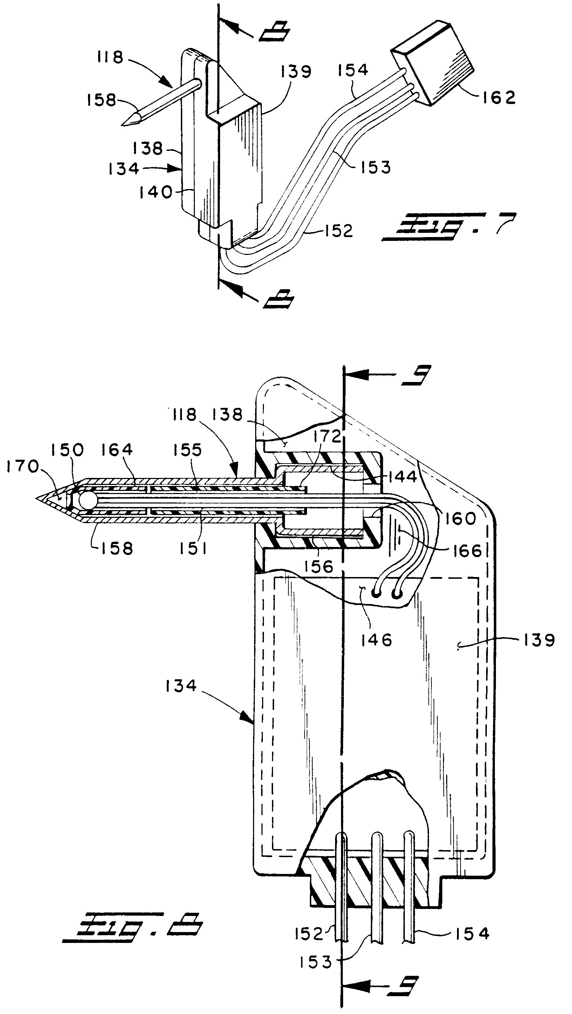

A support post 48 preferably formed of molded plastic material extends outwardly from the circuit board 46; and, post 48 has embedded therein a thermistor 50 which has the electrical leads 51, 49 thereof extending through the circuit board and attached thereto on the opposite side thereof. The circuit board 46 and post 48 are retained in the cover 38 by any suitable potting compound indicated by reference numeral 58 in FIG. 3.

A plurality of electrical connector terminals 52, 53, 54 are attached to the circuit board and extend outwardly through apertures as, for example, the aperture indicated by reference numeral 56 in FIG. 3; and, the terminals are surrounded by the shroud 40.

In the presently preferred practice of the embodiment of FIGS. 1 through 3, the post 48 surrounding the thermistor 50 is formed to interfit the inner diameter of cup 30 in a closely fitting engagement for thermal conductivity therewith. The post 48 surrounding the thermistor is preferably formed of a plastic compound having a relatively high thermal conductivity.

The invention in the embodiment of FIGS. 1 through 3 thus provides a self contained and removable temperature sensing assembly 34 which may be fabricated separately and then installed on a conduit or, as shown, a refrigerant valve block 12, with the post 48 making thermally conductive contact with the interior of cup 30 for heat transfer through the cup from the fluid flowing in passage 16. Thermistor 50 thus provides an electrical signal indicative of the temperature of the fluid refrigerant flowing in passage 16. The removable temperature sensing assembly 34 may thus be replaced as a unit without disturbing the seal of the cup 30 over the sensing port 20.

Although the post 48 is preferably formed integrally with the circuit board 46, it will be understood that if a circuit board is not required, the post may be formed integrally with an extend outwardly from the inside of the cover 38; and, two of the terminals 52 ,53, 54 may be mounted directly to the cover and connected separately to the thermistor leads 49, 51. The printed circuit board and the thermistor leads 49, 51 are secured in the cover, preferably by a suitable non-conductive potting compound indicated in FIG. 3 by reference numeral 58.

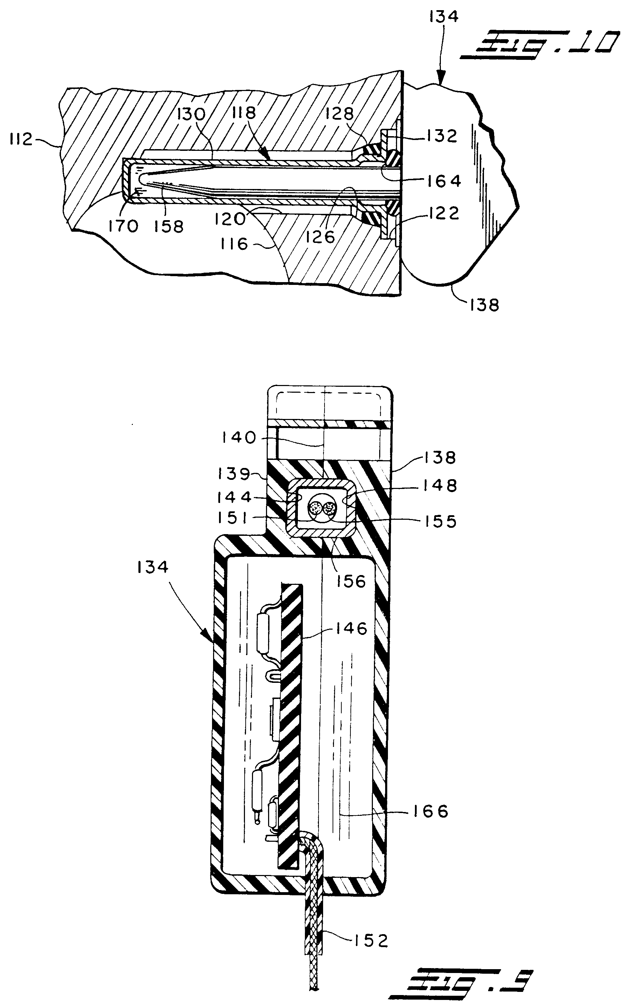

Referring to FIG. 4, 5, and 6 an alternate embodiment of the invention is illustrated wherein a thermal expansion valve 110 having a block 112 with a high pressure inlet 113 for supplying an internal valving mechanism (not shown) which controls flow to low pressure outlet 116, has a temperature sensing probe assembly indicated generally at 118 secured to block 112 by a mounting bracket 136. Bracket 136 is fastened to block 112 by a screw 142 or other suitable fastening expedient.

A sensing port 120 is formed through the wall of the valve block and has a counterbore 122 provided at the outer surface of the block. In the embodiment of FIGS. 4 through 6, the sensing port communicates with the valve outlet 116, as shown in FIG. 5, which typically is adapted for connection to the evaporator inlet of a refrigeration system.

Referring to FIGS. 7, 8, and 9, the temperature sensing probe assembly 118 of the embodiment of FIG. 4 is illustrated in greater detail wherein the cover or housing comprises half shells 138, 139 divided at parting line 140, along which the shells are secured together by any suitable expedient as, for example, snap-lock fastening tabs (not shown) or plastic weldment such as by ultrasonic technique.

Referring to FIGS. 8 and 9, the housing 134 has interiorly walled recesses 144, 148 formed respectively in the split shells 139, 138, which recesses 144, 148 have received therein the polygonal, preferably rectangular cross-sectioned portion 156 of a thermally conducting closed end tubular probe 158 which extends outwardly through the wall of the shells 138, 139, and exteriorly of the housing 134 as shown in greater detail in FIG. 8 and also in FIG. 7.

The probe 158 has received therein and located in the closed end thereof a thermistor 150 which has a pair of leads 151, 155, which extend out of probe 158 through aperture 160 formed in the interior walls defining recesses 144, 148 at the parting line of the split shells into the hollow region of the housing 134. The leads 151, 155 are connected to a circuit board 146 which may contain any suitable signal conditioning circuitry. The external portion of probe 158 has a round configuration in transverse section which is generally reduced in diameter from the rectangular portion 156.

It will be understood that the rectangular or polygonal cross-sectional portion 156 of the probe 158 is captured for positioning and retention between the shells 138, 139 by the walls of the recesses 144, 148 upon welding together of shells 132, 139. The printed circuit board 146 has leads 152, 153, 154 extending externally through the wall of the housing 134 via grooves or slots formed at the parting line of the shells 138, 139 which leads provide for power to the circuit board and transmission of the thermistor temperature signal to a remote location. With reference to FIG. 7, the leads 152, 153, 154 have an electrical connector block 162 provided on the end thereof for facilitating external connection of the probe assembly 118 to appropriate remote circuitry.

Referring to FIG. 8, the thermistor has a relatively thin wall length of heat shrink tubing 164 applied thereover in the region adjacent the connection of the leads 151, 155 thereto. The heat shrink tubing 164 is formed of a suitable material which provides the desired thermal conductance between the thermistor 150 and the tubular probe 158.

Referring to FIG. 10, the details of the installation of the probe assembly 118 on valve block 112 are illustrated wherein the sensing port 120 is sealed by a metallic cup-shaped or closed end tubular member 130 which has the open end or rim thereof turned outwardly to form a flange 132 which has an annular seal ring 128 provided on the undersurface thereof and which is sealed against a chamfer 126 provided in the port 120 in the bottom of counterbore 122. In the present practice of the invention, the tubular member 130 is formed of metallic material having a relatively high thermal conductivity such as copper, brass, or aluminum.

The probe 158 is received in the tube 130 and has the outer diameter thereof closely interfitting the inner periphery of tube 130 for thermal conductivity therewith. The open end of tube 130 has a second seal ring 164 provided about the tube 158 for sealing the probe 158 between the flange 132 and the housing 134.

In the presently preferred practice, a thermally conductive fluid medium, such as a thermally conductive grease indicated by reference numeral 170 in Figs. 8 and 10, is packed in the member 30, tube 130 and probe 158 to aid in the thermal responsiveness of the thermistor to changes in temperature of the fluid in the passages 18 and 116.

Optionally, a protective sleeve 172 is received over the thermistor leads 151, 155 for facilitating assembly.

The embodiment of FIGS. 4 through 9 thus provides a self-contained thermistor probe assembly for insertion into a sensing port in a closed fluid flow system which has a thermally conductive metal closure sealed therein. The temperature sensing probe assembly of the present invention is attached thereto by a bracket and retained in position thereby. The probe assembly comprises a closed end metal tube having a thermistor with heat shrink tubing thereover inserted into the tube in thermally conductive relationship therewith. The thermistor leads extend out of the open end of the metal tube into a housing which may contain a printed circuit board having electrical connector leads attached thereto which extend outwardly through the housing and which have a terminal connector provided thereon. The present invention thus provides a readily removable temperature probe assembly which may be inserted into a sealed sensing port formed by a deep well cup provided in a fluid conduit or valve block; and, the probe is readily removable therefrom without disturbing the sealed fluid passage.

The present invention thus provides a unique and novel closure of a thermal sensing port in a fluid flow conduit, particularly a refrigerant valve block, and provides for installation of a readily removable thermistor temperature sensing probe assembly for providing an electrical signal indicative of the changes in the temperature of the fluid flowing in the conduit or valve block.

Although the invention has hereinabove been described with respect to the illustrated embodiments, it will be understood that the invention is capable of modification and variation and is limited only by the scope of the following claims.

## Claims

1. A valve assembly for controlling flow of refrigerant to a heat exchanger comprising:
(a) body means defining an inlet passage (14) adapted for receiving pressurized refrigerant, said body means including a valving chamber and valve means movable therein for restricting flow and an outlet passage for discharging flow at a significantly reduced pressure, said outlet passage adapted for connection to said heat exchanger;
(b) means defining a continuous passage (16) through said body means, said passage adapted for connection to receive therethrough refrigerant flow discharging from said heat exchanger;
(c) said body means further defining a sensing port (20) communicating separately with one of said passages;
(d) means defining a cup-shaped (30) closure for said sensing port, said closure formed of material having a relatively high thermal conductivity and sealingly attached over said port with the open end of said cup shape exposed to the exterior thereof;
(e) a removable probe assembly (18) including a housing (34) having a post (48) formed of thermally conductive solid medium extending therefrom with a thermistor (50) disposed interiorly of said post adjacent the end thereof remote from said housing, said thermistor having electrical lead means (49, 51) extending from said post into said housing, said post received in said cup-shaped closure providing heat-transfer between said cup-shaped closure and said thermistor;
(f) electrical connector means (62) operatively connected to said lead means and externally accessible from said housing; and,
(g) means releasably fastening said housing to body means.

2. The assembly defined in claim 1, wherein said closure employs a resilient seal ring thereabout and is secured to said body means by deformation of the material of said body means.

3. The assembly defined in claim 1, wherein said closure is secured to said body means by deforming the material of said body means over the periphery of said closure means.

4. The assembly defined in claim 1, wherein said closure is secured to said body means by ring staking.

5. The valve assembly defined in claim 1, wherein said solid medium comprises a tube having the end thereof closed and formed substantially of material selected from the group comprising copper, aluminum, or brass, with said closed end received in said cup-shaped closure.

6. The valve assembly defined in claim 1, wherein said closure is formed of metallic material having a relatively high thermal conductivity.

7. The valve assembly defined in claim 1, wherein said closure is formed substantially of material selected from the group consisting of corrosion-resistant steel, nickel, and aluminum.

8. The valve assembly defined in claim 1, wherein said solid medium is formed substantially of material selected from the group consisting of cured resin, copper, aluminum, and thermoplastic.

9. The valve assembly defined in claim 1, wherein said thermally conductive solid medium comprises a metal tube received over said thermistor with one end thereof closed, said tube having the outer periphery thereof sized to contact the wall of said cup-shaped closure in heat conducting relationship.

10. A valve assembly for controlling flow of refrigerant to a heat exchanger comprising:
(a) body means (112) defining an inlet (113) adapted for receiving pressurized refrigerant, said body means further defining an outlet passage (116) adapted for connection to said heat exchanger, said body means having a valving surface therein and a valve member movable with respect to said valving surface for controlling refrigerant flow to said heat exchanger and expansion thereof to a substantially reduced pressure;
(b) means defining a continuous unvalved passage (16) through said body means, said unvalved passage adapted for connection to receive therethrough refrigerant flow discharging from said heat exchanger;
(c) means defining a separate sensing port (120) in said body means, said sensing port communicating separately with one of said passages;
(d) closure means (130) formed of relatively high thermal conductivity material and attached over said sensing port in fluid pressure sealing engagement, said closure means defining a sensing cavity in said port; and,
(e) a thermistor probe assembly (118) including a housing having a thermally conductive closed end tube (150) extending therefrom with a thermistor disposed in said tube adjacent said closed end and having a pair of electrical leads (151, 155) extending therefrom, said tube disposed in said cavity and having the periphery thereof in heat conducting relationship with the wall of said cavity.

11. A temperature sensing assembly comprising:
(a) a cup-shaped cover having support post means extending from the interior of said cup shape and having electrical connector terminal means provided on the exterior thereof and adapted for external electrical connection thereto, said cover adapted for attachment over a sensing port;
(b) thermistor means supported by said post means, said thermistor means including a pair of leads connected to said terminal means; and,
(c) a tube formed of thermally conductive solid material and having one end closed with the other end received over said thermistor, said tube sized to have the interior thereof contacting said thermistor in heat transfer relationship.

12. The temperature sensing assembly defined in claim 11, wherein said post means comprises a hollow stanchion with said leads extending through the hollow thereof.

13. The temperature sensing assembly defined in claim 11, wherein said tubing is formed substantially of material selected from the group consisting of copper, aluminum, and brass.

14. The temperature sensing assembly defined in claim 11, wherein said cover includes circuit board means potted therein with said post means extending therefrom in a direction outwardly of said cup shape.

15. The temperature sensing assembly defined in claim 11, wherein said cover is formed of plastic material.

16. The temperature sensing assembly defined in claim 11, wherein said cover has a shroud portion formed integrally therewith extending exteriorly thereof and surrounding said electrical terminal means.

17. A temperature sensing assembly comprising:
(a) a cup-shaped cover having circuit board means potted therein;
(b) thermistor means including lead means electrically connected to said circuit board means;
(c) post means supporting said thermistor means on said circuit board means, said post means comprising plastic material molded over said thermistor and said lead means, said plastic material adapted for insertion in a sensing port; and,
(d) electrical connector means attached to said circuit board means and extending through said cover for external connection thereto.

18. The temperature sensing assembly defined in claim 17, wherein said cover includes a shroud portion formed integrally therewith extending outwardly therefrom and surrounding said electrical connector means.

19. The temperature sensing assembly defined in claim 18, wherein said cover is formed of plastic material.

20. A temperature sensing probe assembly comprising:
(a) housing means comprising a pair of shells secured together along a parting line;
(b) a tube having one end closed and extending exteriorly of said housing means with the open end disposed interiorly of said housing means in the region of said parting line and supported between said pair of shells when said shells are secured together;
(c) a thermistor received in said tube and disposed in thermally conductive arrangement with the interior of said tube and including electrical lead means extending into said housing means from the open end of said tube;
(d) circuit board means disposed within said shells and having said electrical lead means connected thereto; and,
(e) electrical connector means connected to said circuit board means and extending exteriorly of said housing means, wherein said tube is adapted to be inserted in a sensing port in thermally conductive engagement.

21. The assembly defined in claim 20, wherein said thermistor has a section of heat shrink thereover.

22. The assembly defined in claim 21, wherein said circuit board means is potted in said housing means.

23. The assembly defined in claim 21, wherein said housing means has the voids therein substantially filled with potting compound.

24. The assembly defined in claim 21, wherein said tube is formed of material selected from the group consisting of aluminum, brass, and copper.

25. The assembly defined in claim 21, wherein the portion of said tube extending in to said housing shells has a polyzonal transverse shape; and, the portion thereof extending exteriorly of said shells has a generally round transverse shape.

26. The assembly defined in claim 21, wherein the portion of said tube extending interiorly of said sheets is enlarged.

27. A refrigerant expansion valve assembly comprising:
(a) a valve block having a movable valve member and a refrigerant flow passage therein and a sensing port communicating separately with said passage;
(b) a tubular closure member formed of material having a relatively high thermal conductivity having one end closed, and disposed in said port for contact with refrigerant flow in said passage, said closure member having the other end open and sealed about the outer periphery thereof for closing said port, with the interior of said metal member open to the exterior of said block;
(c) a tubular probe formed of material of relatively high thermal conductivity having one end closed and disposed in said tubular closure member and having surfaces thereof closely interfitting the interior of said tubular closure member for facilitating heat transfer therebetween, said probe having an open end thereof extending exteriorly of said tubular closure;
(d) a thermistor having a pair of electrical leads disposed in said tubular probe adjacent the closed end, and operative to be in heat transfer relationship with said tubular probe;
(e) housing means attached to the open end of said probe, with said pair of leads extending from said probe interiorly of said housing means, said housing means removably attached to said block for positioning said probe in said closure member;
(f) circuit means disposed in said housing means and having said pair of leads attached thereto; and,
(g) electrical connector means connected to said circuit means and extending exteriorly of said housing means.
